# EUROPÄISCHE PATENTSCHRIFT

(11) **EP 1 206 090 B1**
(45) Veröffentlichungstag und Bekanntmachung des Hinweises auf die Patenterteilung: **18.06.2008**
(21) Anmeldenummer: 01440360.4
(22) Anmeldetag: 25.10.2001
(51) Int. Cl.: H04L 12/64

(54) **Verfahren, Vorrichtungen und Programm- Module zur Datenübertragung mit gesicherter Dienstqualität**
Method, appartus and programming module for data transmission with a secured quality of service
Procedée, dispositif et module de programmation pour la transmission des données avec une qualité de service securisée

(30) Priorität: 09.11.2000 DE 10055422
(43) Veröffentlichungstag der Anmeldung: 15.05.2002
(73) Patentinhaber: Alcatel Lucent, 75008 Paris (FR)
(72) Erfinder: Weik, Hartmut, 70195 Stuttgart (DE)
(74) Vertreter: Schmidt, Werner Karl

(56) Entgegenhaltungen:
- EP-A2- 1 014 632
- WO-A1-00/08891
- DE-A1- 19 645 368

## Beschreibung

Die vorliegende Erfindung betrifft ein Verfahren zur Datenübertragung mit gesicherter Dienstqualität sowie ein Gateway-Programm-Modul hierfür, ein Vorfeldeinrichtungs-Programm-Modul hierfür, ein Endgerät-Programm-Modul hierfür, ein Gateway hierfür, eine Vorfeldeinrichtung hierfür und ein Endgerät hierfür.

In zunehmendem Maße werden Sprachverbindungen oder sonstige Kommunikationsverbindungen, bei denen eine Übertragung mit hoher Dienstqualität, z.B. in Echtzeit, erforderlich ist, über Datennetzwerke, insbesondere über das Internet, aufgebaut. Im Internet wird eine Sprachübertragung mittels des sogenannten VolP (Voice over Internet-Protocol) ermöglicht. Kommunikationsverbindungen über Datennetzwerke, insbesondere über das Internet, sind für die die Kommunikationsverbindungen nutzenden Teilnehmer kostengünstig. Datennetzwerke sind jedoch typischerweise paketvermittelt und neigen bei starker Netzbelastung dazu, Datenpakete verzögert weiterzuleiten oder gar zu löschen, so dass eine gesicherte, in Echtzeit erfolgende Übertragung von Echtzeitdaten nur bedingt gewährleistet werden kann. Es sind zwar Prozeduren in der Diskussion, mit denen eine vorbestimmte Dienstqualität (engl. Quality of Service =QoS oder Type of Service = ToS) bei der Datenübertragung über das Internet sichergestellt werden soll. Treten jedoch Übermittlungsschwierigkeiten auf dem Internet auf, werden die jeweiligen Echtzeitdaten verzögert oder sogar gar nicht mehr übertragen, so dass beispielsweise eine zufriedenstellende Kommunikation auf einer VolP-Verbindung nicht mehr möglich ist. VolP-Verbindungen werden daher momentan insbesondere dann genutzt, wenn Störungen in der Kommunikation zwischen Teilnehmern akzeptierbar sind, beispielsweise für private Telefongespräche. Für Kommunikationsverbindungen, bei denen eine höhere Dienstqualität gefordert ist, beispielsweise für geschäftliche Telefongespräche, sind VolP-Verbindungen allerdings aufgrund ihrer eingeschränkten Qualität eher unüblich.

In der Patentanmeldung DE 196 45 368 A1 ist ein Verfahren zum Umschalten zwischen einer Leitungsvermittlung und einer Paketvermittlung offenbart, durch das ein dynamisches Hin- und Herschalten eines Telekommunikationsvorgangs ermöglicht wird. Der Schaltvorgang kann dabei durch ein Steuersignal initiiert werden, das z.B. durch den Nutzer oder durch Überprüfung der Qualität der Datenübertragung ausgelöst wird.

Die Patentanmeldung EP 0920176 offenbart auch ein Verfahren zum Umschalten zwischen einer Leitungsvermittlung und einer Paketvermittlung.

Es ist daher Aufgabe der vorliegenden Erfindung, eine Datenübertragung mit gesicherter Dienstqualität bereitzustellen, wobei für die Datenübertragung ein Datennetzwerk eingesetzt werden soll.

Diese Aufgabe wird gelöst durch ein Verfahren gemäß der technischen Lehre des Anspruchs 1.

Zur Lösung der Aufgabe sind ferner vorgesehen: ein Gateway-Programm-Modul gemäß der technischen Lehre des Anspruchs 8, ein Vorfeldeinrichtungs-Programm-Modul gemäß der technischen Lehre des Anspruchs 9, ein Endgerät-Programm-Modul gemäß der technischen Lehre des Anspruchs 10, ein Gateway gemäß der technischen Lehre des Anspruchs 11, eine Vorfeldeinrichtung gemäß der technischen Lehre des Anspruchs 12 und ein Endgerät gemäß der technischen Lehre des Anspruchs 13.

Der Erfindung liegt dabei der Gedanke zugrunde, dass nach Möglichkeit ein Datennetzwerk für eine von einem Endgerät eines Teilnehmers angeforderte Kommunikationsverbindung genutzt wird. Wenn jedoch das Datennetzwerk eine für die Kommunikationsverbindung erforderliche, vorbestimmte Dienstqualität nicht bereitstellen kann, wird die Kommunikationsverbindung über ein geschaltetes Telekommunikationsnetz aufgebaut, beispielsweise ein öffentliches oder privates Telefonnetz, ein ATM-Netz (ATM = Asychronous Transfer Mode) oder ein MPLS-Netz (Multiprotocol Label Switching). Bei einer durch das geschaltete Telekommunikationsnetz geschalteten Kommunikationsverbindung kann es sich um eine physikalisch geschaltete Verbindung handeln und/oder um eine logisch geschaltete Verbindung. Geschaltete logische Verbindungen können beispielsweise auf einem TDM-Netz (Time-Division Multiplex), einem ATM-Netz oder einem MPLS-Netz aufgebaut werden. Man kann auf einem geschalteten Telekommunikationsnetz aufgebauten Verbindungen auch als "sichere" oder "gesicherte" Verbindungen bezeichnen, weil auf diesen Verbindungen eine vorbestimmte Dienstqualität von dem sozusagen "sicheren" (geschalteten) Telekommunikationsnetz sichergestellt wird. Für den Teilnehmer ist dieses Verfahren bequem, weil ein zwischen das Endgerät des Teilnehmers und das Datennetzwerk sowie das geschaltete Telekommunikationsnetz geschaltetes Gateway für die Einhaltung der geforderten Dienstqualität sorgt. Auf diese Weise kann der Teilnehmer optimal die kostengünstige Übertragung über das Datennetzwerk, beispielsweise das Internet, nutzen und kommt dennoch in den Genuss einer gesicherten Dienstqualität.

Weitere vorteilhafte Ausgestaltungen der Erfindung finden sich in den abhängigen Ansprüchen sowie in der Beschreibung.

Vorteilhafterweise überprüft das Gateway bereits vor dem Aufbau der Kommunikationsverbindung, ob das Datennetzwerk die geforderte Dienstqualität bereitstellen kann, und baut, sofern dies der Fall ist, die Kommunikationsverbindung auf dem Datennetzwerk auf. Anderenfalls baut das Gateway die Kommunikationsverbindung über das geschaltete Telekommunikationsnetz auf.

Das Gateway überprüft zweckmäßigerweise bei einer bereits auf dem Datennetzwerk bestehenden Kommunikationsverbindung, beispielsweise zyklisch oder aufgrund einer von extern erhaltenen Aufforderung, ob die geforderte Dienstqualität noch gewährleistet ist und schaltet gegebenenfalls auf das geschaltete Telekommunikationsnetz um.

Vorteilhafterweise überprüft das Gateway auch bei einer bereits auf dem geschalteten Telekommunikationsnetz bestehenden Kommunikationsverbindung, ob sich die Verhältnisse bezüglich der Dienstqualität auf dem Datennetzwerk geändert haben. Wenn eine Datenübertragung auf dem Datennetzwerk mit einer gesicherten Dienstqualität möglich ist, schaltet das Gateway die Kommunikationsverbindung auf das Datennetzwerk um.

Es versteht sich, dass beliebige Kombinationen der obigen Varianten der Überprüfung der von dem Datennetzwerk bereitstellbaren Dienstqualität vor und/oder während einer bereits auf dem Datennetzwerk oder dem geschalteten Telekommunikationsnetz bestehenden Kommunikationsverbindung das Gateway möglich sind. Ferner kann auch von dem die Kommunikationsverbindung anfordernden Endgerät eine solche Überprüfung angefordert werden. Weiter kann das Datennetzwerk bei einer Änderung der bereitstellbaren Dienstqualität eine Nachricht an das Gateway senden.

Das Gateway kann die für eine jeweilige Kommunikationsverbindung bei dem Datennetzwerk anzufordernde Dienstqualität auf verschiedene Weise ermitteln:

In einer Variante ermittelt das Gateway anhand einer für die Kommunikationsverbindung vorgesehenen Zieladresse, z.B. anhand einer Zuordnungstabelle, welche Dienstqualität für eine Kommunikationsverbindung zu dieser Zieladresse erforderlich ist. Wenn der die Kommunikationsverbindung anfordernde Teilnehmer beispielsweise an seinem Endgerät eine Rufnummer eine Geschäftspartners wählt, baut das Gateway die Kommunikationsverbindung vorzugsweise auf dem geschalteten, eine hohe Dienstqualität bereitstellenden Telekommunikationsnetz auf. Wählt der Teilnehmer dagegen eine Rufnummer für ein privates Telefongespräch, ermittelt das Gateway dafür eine niedrigere Dienstqualität und nutzt daher vorzugsweise das Datennetzwerk.

Es ist auch möglich, dass der Teilnehmer dem Gateway die von ihm gewünschte mindeste Dienstqualität in einer Anforderungsnachricht mitteilt. Dies kann beispielsweise die Anforderungsnachricht sein, mit der eine Kommunikationsverbindung bei dem Gateway angefordert wird. Die Anforderung der Dienstqualität kann für eine aktuell aufzubauende Kommunikationsverbindung gelten oder auch für später aufzubauende Kommunikationsverbindungen. Zur Anforderung der Dienstqualität wählt der Teilnehmer beispielsweise eine Vorwahl zu einer Rufnummer oder stellt den oder die entsprechenden Dienstqualität-Werte über eine von dem Gateway bereitgestellte, z.B. mittels eines Internet-Browsers nutzbaren Bedienoberfläche ein.

Das Gateway ist vorzugsweise in ein Zugangsnetz integriert, die dem Teilnehmer einen Zugang zu dem Datennetzwerk sowie zum geschalteten Telekommunikationsnetz ermöglicht. Bei dem Zugangsnetz ist dann zwischen den Teilnehmer und das Gateway eine Vorfeldeinrichtung geschaltet, die mehrere Teilnehmer bedient.

In einer besonders bevorzugten Variante ist das Teilnehmer-Endgerät über ein sogenanntes Hybrid-Fiber-Coax-Kabel (HFC) an die Vorfeldeinrichtung angekoppelt, über das auf verschiedenen Kanälen z.B. Sprache, Datenverkehr und Rundfunk- und Fernsehdaten übertragen werden können.

Jedenfalls ermittelt die Vorfeldeinrichtung in einer bevorzugten Variante, ob eine Kommunikationsverbindung beispielsweise für Sprach- oder für Datenübertragung aufzubauen ist. Dazu wertet die Vorfeldeinrichtung vorzugsweise jeweils für die Kommunikationsverbindung angegebene Zieladressen oder einen sonstigen der zu übertragenden Spache bzw. den zu übertragenden Daten zugeordneten Kennzeichner aus. Zweckmäßigerweise jedoch werden Sprache und für Daten auf jeweils separaten Übertragungswegen, insbesondere auf verschiedenen Kanälen des HFC-Kabels, vom Endgerät zur Vorfeldeinrichtung übertragen, so dass diese anhand des gewählten Übertragungsweges die jeweils erforderliche Dienstqualität ermitteln und bei dem Gateway anfordern kann.

Die Vorfeldeinrichtung sendet dem Gateway vorzugsweise eine Anforderungsnachricht, in der eine mindestens einzuhaltende Dienstqualität für eine aufzubauende Kommunikationsverbindung angegeben ist. Es ist auch möglich, dass die Vorfeldeinrichtung separate, einer jeweiligen mindestens einzuhaltenden Dienstqualität zugeordnete Übertragungswege, z.B. separate Kanäle einer Übertragungsleitung, zur Übertragung von Sprach- und sonstigen Daten nutzt und dass das Gateway anhand des jeweils genutzten Übertragungswegs die mindestens einzuhaltende Dienstqualität für die jeweiligen, zur weiteren Übertragung der Sprach- und sonstigen Daten erforderlichen Kommunikationsverbindungen ermittelt.

Es ist möglich, dass das Gateway und die Vorfeldeinrichtung zu einer gemeinsamen Vorrichtung kombiniert sind.

Im Folgenden werden die Erfindung und ihre Vorteile anhand eines Ausführungsbeispiels unter Zuhilfenahme der Zeichnung dargestellt.
- Figur 1: zeigt eine Anordnung zur Ausführung des erfindungsgemäßen Verfahrens mit einem erfindungsgemäßen Endgerät TERA, einer erfindungsgemäßen Vorfeldeinrichtung INA und einem erfindungsgemäßen Gateway UAG.
- Figur 2: zeigt schematisch ein Gateway-Programm-Modul GWM.
- Figur 3: zeigt schematisch ein Vorfeldeinrichtungs-Programm-Modul VVM
- Figur 4: zeigt schematisch ein Endgerät-Programm-Modul EM.

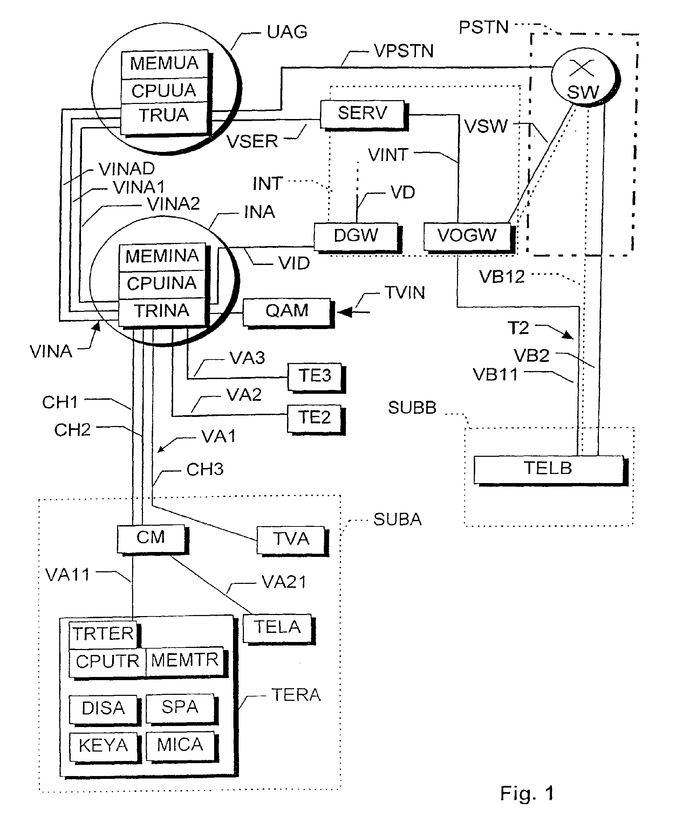

In Figur 1 ist eine beispielhafte Anordnung dargestellt, mit der die Erfindung ausgeführt werden kann. Figur 1 zeigt ein geschaltetes Telekommunikationsnetz PSTN, ein Datennetz INT sowie Endgeräte TERA, TELA und TVA eines Teilnehmers SUBA, der durch einen punktierten Kasten angedeutet ist. Das Endgerät TVA ist beispielsweise ein Fernseh- oder Rundfunkempfänger und das Endgerät TELA ein Festnetz-Telefon. Das Endgerät TERA wird später erläutert.

Die Endgeräte TERA, TELA und TVA des Teilnehmers SUBA sind über eine Teilnehmeranschlussleitung VA1 an eine Vorfeldeinrichtung INA angeschlossen. Die Vorfeldeinrichtung INA bedient ferner über Teilnehmeranschlussleitungen VA2, VA3 Endgeräte oder Endgerätegruppen TE2 bzw. TE3 zweier weiterer, nicht dargestellter Teilnehmer. An die Vorfeldeinrichtung INA können auch weitere Teilnehmeranschlussleitungen angeschlossen sein.

Vorliegend sind die Teilnehmeranschlussleitungen VA1, VA2, VA3 HFC-Kabel (HFC = Hybrid Fiber Coax), auf denen jeweils diverse Übertragungskanäle als separate Übertragungswege vorgesehen sind. Die Vorfeldeinrichtung INA terminiert die Teilnehmeranschlussleitungen VA1, VA2, VA3, wobei sie auf den Übertragungskanälen jeweils Daten sendet und empfängt. Ferner ist an die Vorfeldeinrichtung INA ein Multiplexer QAM angeschlossen oder in diese integriert, der auf die Teilnehmeranschlussleitungen VA1, VA2, VA3 Multimedia-Daten TVIN, z.B. Rundfunk- und/oder Fernsehsignale oder sonstige Multimedia-Daten, einspeist. Der Multiplexer QAM arbeitet im Ausführungsbeispiel nach dem sogenannten Quadratur-Amplituden-Multiplexverfahren. Die Multimedia-Daten werden auf einem Kanal CH3 der Teilnehmeranschlussleitung VA1 eingespeist, der beispielhaft für weitere, nicht dargestellte und für Multimedia-Daten vorgesehene Kanäle der Teilnehmeranschlussleitung VA1 steht. Teilnehmerseitig empfängt bei dem Teilnehmer SUBA das Endgerät TVA die Multimedia-Daten auf dem Kanal CH3.

Zum Anschluss der Endgeräte TERA und TELA an die Teilnehmeranschlussleitung VA1 ist eine teilnehmerseitige Netzabschlusseinrichtung CM vorgesehen, die vorliegend ein sogenanntes Kabelmodem ist, an das die Endgeräte TERA und TELA über Leitungen VA11 bzw. VA21 angeschlossen sind. Die Netzabschlusseinrichtung CM terminiert Kanäle CH1, CH2 der Teilnehmeranschlussleitung VA1 und stellt eine Verbindung zwischen den Kanälen CH1, CH2 und den Leitungen VA11 bzw. VA21 her.

Bei einer Ausgestaltung der Teilnehmeranschlussleitung als ISDN-Teilnehmeranschlussleitung (ISDN = Integrated Services Digital Network) könnte die Netzabschlusseinrichtung CM auch z.B. ein sogenannter NT-Adapter sein kann (NT = Network Terminator), an den die Endgeräte TERA und TELA über einen sogenannten So-Bus angeschlossen sind. Ferner könnte die Netzabschlusseinrichtung CM auch einen Anschluss für einen sogenannten VolP-Bus (VolP = Voice over Internet-Protocol) aufweisen, an den die Endgeräte TERA und TELA anschließbar sind.

Die Vorfeldeinrichtung INA ist über Leitungen oder Übertragungswege VINAD, VINA1, VINA2 einer Leitung oder eines Leitungsbündels VINA mit einem Gateway UAG verbunden, das Kommunikationsverbindungen zum Einen zum geschalteten Telekommunikationsnetz PSTN und zum Anderen zum Datennetzwerk INT herstellen kann.

Das Datennetzwerk INT kann beispielsweise das Internet oder ein sonstiges paketvermitteltes Datennetzwerk sein. Von dem Datennetzwerk INT sind lediglich ein Server SERV, Gateways DGW und VOGW sowie Verbindungen VD, VINT gezeigt, die exemplarisch für weitere, nicht dargestellte Server, Router, Switches, Übertragungswege etc. des Datennetzwerks INT stehen. Über das Gateway DGW kann die Vorfeldeinrichtung INA unmittelbar und ohne Mitwirkung des Gateways UAG Daten an das Datennetzwerk INT senden oder von diesem empfangen. Der Server SERV steht beispielhaft für Netzwerkeinrichtungen, über die das Gateway UAG Kommunikationsverbindungen im Datennetzwerk INT aufbauen kann. Das Gateway UAG kann dem Datennetzwerk INT zugeordnet sein.

Das Telekommunikationsnetz PSTN kann beispielsweise ein analoges oder ein ISDN-Telekommunikationsnetz sein. Exemplarisch für nicht dargestellte Vermittlungsstellen, Netzwerk-Management-Systeme, Verbindungsleitungen etc. ist von dem Telekommunikationsnetz PSTN lediglich eine Vermittlungsstelle SW gezeigt.

Das Telekommunikationsnetz PSTN kann prinzipiell auch auf einem Datennetzwerk basieren, das zwar an sich paketvermittelt ist, auf dem aber logische Kanäle mit einer vorbestimmten und durch das jeweilige Datennetzwerk garantierten Datenrate eingerichtet, also sozusagen "geschaltet" werden können, wie es beispielsweise bei einem ATM-Netz möglich ist (ATM = Asychronous Transfer Mode). Jedenfalls ist das Telekommunikationsnetz PSTN vorzugsweise ein Netzwerk, das definierte Dienstqualitäten (Quality of Service = QoS) bei der Übertragung zur Verfügung stellt und Sicherheit gegen unbefugten Zugriff auf die auf dem Netzwerk übertragenen Daten garantiert. Daher werden aus Sicherheitsgründen in einem solchen Fall sogenannte Tunnel-Verbindungen aufgebaut, auf denen über Tunnel-Protokolle kommuniziert wird, beispielsweise über das sogenannte IPSecure-Protokoll (IPSec). In einer weiteren vorteilhaften Lösung ist das Telekommunikationsnetz PSTN ein sogenanntes Label Switching-Netzwerk, beispielsweise ein Multiprotocol Label Switching (MPLS) Netzwerk, wobei die Verbindungen mit gesicherter Dienstqualität dann über sogenannte Label Switching-Tunnel bzw. MPLS-Tunnel führen.

Ein Endgerät TELB eines Teilnehmers SUBB ist über eine Verbindung VB2, die z.B. auf einer Teilnehmeranschlussleitung T2 aufgebaut wird, an die Vermittlungsstelle SW angeschlossen. Diese erfüllt dabei z.B. die Funktionen einer Ortsvermittlungsstelle. Über eine weitere Verbindung VB11 steht das Endgerät TELB mit dem Gateway VOGW in Verbindung. Das Gateway VOGW ist vorliegend ein VolP-Gateway und ermöglicht dem Endgerät TELB sogenannte VolP-Verbindungen über das Datennetzwerk INT. Die Verbindung VB11 kann z.B. eine unmittelbare Verbindung zwischen dem Gateway VOGW und dem Endgerät TELB sein, die in Figur 1 mit einer durchgehenden Linie gezeigt ist oder aber eine logische Verbindung, die in einer gestrichelt gezeichneten Variante VB12 über die Teilnehmeranschlussleitung T2 und die Verbindung VSW zu der Vermittlungsstelle SW oder einer sonstigen Vermittlungsstelle des Telekommunikationsnetzes PSTN führt, die einen Zugang zum Datennetzwerk INT ermöglicht.

Eine Kommunikationsverbindung von einem der Endgeräte TERA oder TELA des Teilnehmers SUBA zu dem Endgerät TELB des Teilnehmers SUBB wird über die Vorfeldeinrichtung INA sowie das Gateway UAG realisiert. Dabei ermittelt das Gateway UAG, ob von dem Datennetzwerk INT mindestens eine vorbestimmte Dienstqualität für die Kommunikationsverbindung bereitgestellt werden kann. Wenn dies der Fall ist, baut das Gateway UAG die Kommunikationsverbindung über das Datennetzwerk INT auf, andernfalls über das Telekommunikationsnetz PSTN. Verschiedene Varianten hierzu werden später noch erläutert. Zunächst jedoch soll auf den internen Aufbau der erfindungsgemäßen Komponenten Gateway UAG, Vorfeldeinrichtung INA, Endgerät TERA, Gateway-Programm-Modul GWM, Vorfeldeinrichtungs-Programm-Modul VVM und Endgerät-Programm-Modul EM eingegangen werden.

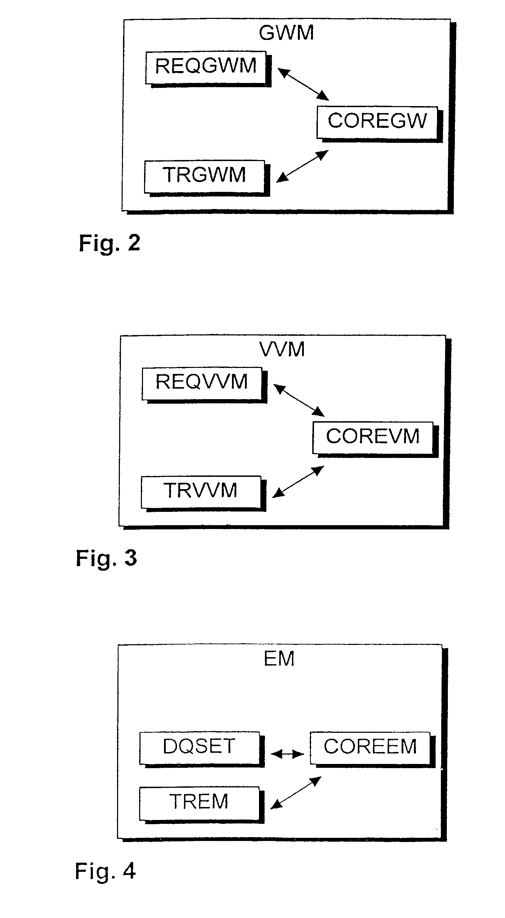

Bei dem Endgerät TERA handelt es sich beispielsweise um einen Personalcomputer oder um ein Telefon-Endgerät. Das Endgerät TERA weist ein als Sende- und Empfangsmittel dienendes Verbindungsmittel TRTER auf, bei dem es sich beispielsweise um ein Modem, einen ISDN-Adapter oder eine Netzwerkkarte handelt. Mit dem Verbindungsmittel TRTER kann das Endgerät TERA eine Verbindung zu der Netzabschlusseinrichtung CM aufbauen. Weiterhin weist das Endgerät TERA ein Steuermittel CPUTR sowie ein Speichermittel MEMTR auf. Das Steuermittel CPUTR ist beispielsweise ein Prozessor mit dem Programm-Code von Programm-Modulen, beispielsweise von dem in Figur 4 schematisch dargestellten Endgerät-Programm-Modul EM, ausgeführt werden kann, die in dem Speichermittel MEMTR gespeichert sind. Bei dem Speichermittel MEMTR handelt es sich z.B. um eine Festplatte oder um RAM-Bausteine. Weiterhin weist das Endgerät TERA ein Anzeigemittel DISA sowie ein Eingabemittel KEYA auf. Das Anzeigemittel DISA ist beispielsweise ein Computer-Monitor oder ein LCD-Display (Liquid Cristal Display). Das Eingabemittel KEYA kann eine Tastatur oder eine Maus sein. Weiterhin weist das Endgerät TERA einen Lautsprecher SPA sowie ein Mikrofon MICA auf, mit denen Sprachaus- bzw. Spracheingabe möglich sind.

Von der Vorfeldeinrichtung INA sind beispielhaft einige wesentliche Komponenten gezeigt, nämlich Sende- und Empfangsmittel TRINA sowie ein Steuermittel CPUINA und ein Speichermittel MEMINA. Mit dem Sende- und Empfangsmittel TRINA, das beispielsweise Sende- und Empfangs-Einsteckkarten, ein Koppelnetzwerk oder dergleichen enthält, kann die Vorfeldeinrichtung INA Daten- und Sprachverbindungen über die Teilnehmeranschlussleitungen VA1, VA2, VA3 aufbauen. Ferner können die Sende- und Empfangsmittel TRINA die Verbindungen VINAD, VINA1, VINA2 zu dem Gateway UAG und die Verbindung VID zum Daten-Gateway DGW aufbauen. Bei dem Steuermittel CPUINA handelt es sich um einen Prozessor oder um eine Gruppe von Prozessoren, die Programmcode von Programm-Modulen, beispielsweise von dem in Figur 3 schematisch dargestellten Vorfeldeinrichtungs-Programm-Modul WM, ausführen können, die in dem Speichermittel MEMINA gespeichert sind. Das Steuermittel CPUINA steuert mit Hilfe der Programm-Module unter Kontrolle eines Betriebssystems die Funktionen der Vorfeldeinrichtung INA und nimmt dabei beispielsweise auf die Funktionen der als Verbindungsmittel dienenden Sende- und Empfangsmittel TRINA Einfluss. Die Sende- und Empfangsmittel TRINA, das Steuermittel CPUINA und das Speichermittel MEMINA sind durch nicht dargestellte Verbindungen untereinander verbunden. Ferner kann die Vorfeldeinrichtung INA weitere Baugruppen aufweisen, z.B. ein Koppelnetzwerk oder eine Schnittstelle zu einem nicht dargestellten, z.B. zum Betrieb des Telekommunikationsnetzes PSTN vorgesehenen Network Management System.

Wie die Vorfeldeinrichtung INA ist auch das Gateway UAG lediglich schematisch dargestellt. Ein Steuermittel CPUUA entspricht dabei dem Steuermittel CPUINA, Speichermittel MEMUA den Speichermitteln MEMINA und Sende- und Empfangsmittel TRUA den Sende- und Empfangsmitteln TRINA. Das Steuermittel CPUUA steuert mit Hilfe von Programm-Modulen, beispielsweise von dem in Figur 2 schematisch dargestellten Gateway-Programm-Modul GWM, unter Kontrolle eines Betriebssystems die Funktionen des Gateways UAG und nimmt dabei beispielsweise auf die Funktionen der als Verbindungsmittel dienenden Sende- und Empfangsmittel TRUA Einfluss. Die Sende- und Empfangsmittel TRUA, das Steuermittel CPUUA und das Speichermittel MEMUA sind durch nicht dargestellte Verbindungen untereinander verbunden. Die Sende- und Empfangsmittel TRUA sind zum schalten von Kommunikationsverbindung sowie zum Senden und Empfangen von Daten auf den Verbindungen VINAD, VINA1, VINA2 zu der Vorfeldeinrichtung INA, auf einer Verbindung VPSTN zu der Vermittlungsstelle SW sowie auf einer Verbindung VSER zu dem Server SERV ausgestaltet.

Das Gateway-Programm-Modul GWM, das Vorfeldeinrichtungs-Programm-Modul VVM und das Endgerät-Programm-Modul EM weisen vorliegend jeweils Programmcode auf, der durch die Steuermittel CPUUA, CPUINA bzw. CPUTR ausgeführt wird. Die Module GWM, VVM und EM sind z.B. in einer Programmiersprache, beispielsweise "C", "C++", Java oder dergleichen, erstellt und werden anschließend durch einen Kompiler oder einen Interpreter in Programmcode übersetzt, der durch die Steuermittel CPUUA, CPUINA bzw. CPUTR ausgeführt werden kann. Die Module GWM, VVM und EM sind lediglich schematisch aus funktionaler Sicht dargestellt und können jeweils auch individuell anders ausgebaut sein. Die Module GWM, VVM und EM weisen jeweils einen zentralen Steuerteil auf, der mit COREGW, COREVM bzw. COREEM bezeichnet ist. Die zentralen Steuerteile COREGW, COREVM der Module GWM, VVM steuern jeweils als Anforderungsmittel dienende Anforderungsfunktionen REQGWM bzw. REQVVM sowie als Sende- und Empfangsmittel dienende Sende- und Empfangsfunktionen TRGWM bzw. TRWM. Der zentrale Steuerteil COREEM des Endgerät-Programm-Moduls EM steuert eine als Sende- und Empfangsmittel dienende Sende- und Empfangsfunktion TREM sowie eine zur Festlegung einer jeweiligen für eine Kommunikationsverbindung erforderlichen Dienstqualität vorgesehene Funktion DQSET. Die jeweiligen Funktionen REQGWM, TRGWM;. TRVVM, REQVVM; TREM, DQSET der Module GWM, WM und EM können lediglich zur Kommunikation mit den ihnen jeweils zugeordneten zentralen Steuerteilen COREGW, COREVM bzw. COREEM ausgestaltet sein, als auch jeweils zu einer unmittelbaren Kommunikation und/oder zu einem unmittelbaren gegenseitigen Funktionsaufruf untereinander.

Im Folgenden werden einige Varianten zum Aufbau von Kommunikationsverbindungen erläutert, die von einem der Endgeräte TERA oder TELA des Teilnehmers SUBA ausgehen.

Von dem für Sprachkommunikation oder Bildtelefonie vorgesehenen Endgerät TELA wird an die Netzabschlusseinrichtung CM eine Anforderungsnachricht gesandt, in der eine dem Endgerät TELB des Kommunikationspartners SUBB zugeordnete Rufnummer angegeben ist. Dabei handelt es sich beispielsweise um eine sogenannte Call-Setup-Nachricht. Die Netzabschlusseinrichtung CM leitet die Anforderungsnachricht über den Kanal CH1 an die Vorfeldeinrichtung INA weiter, wobei der Kanal CH1 für Kommunikationsverbindungen mit hoher Dienstqualität, also insbesondere Sprachkommunikation oder Bildtelefonie, reserviert ist.

Es ist auch möglich, dass die Anforderungsnachricht auf einem für Signalisierungszwecke vorgesehenen, nicht dargestellten Signalisierungskanal zwischen der Netzabschlusseinrichtung CM und der Vorfeldeinrichtung INA übermittelt wird. Dieser kann als sozusagen "gesicherter Kanal" wie der Kanal CH1 einer vorbestimmten Dienstqualität zugeordnet sein. Der Signalisierungskanal kann jedoch auch ein "ungesicherter Kanal" sein, beispielsweise ein D-Kanal auf einer ISDN-Teilnehmeranschlussleitung, da eine Anforderungsnachricht bei einem gegebenenfalls auftretenden Verlust auch wiederholt an die Vorfeldeinrichtung INA gesendet werden kann, ohne die Dienstqualität der durch die Anforderungsnachricht angeforderten, später aufgebauten Kommunikationsverbindung zu beeinträchtigen.

Die vorliegend auf dem Kanal CH1 empfangende Anforderungsnachricht leitet die Vorfeldeinrichtung INA mittels der Sende- und Empfangsmittel TRINA unter Mitwirkung der Sende- und Empfangsfunktion TRVVM auf dem Übertragungsweg VINA1 weiter, der ebenfalls für Kommunikationsverbindungen mit hoher Dienstqualität vorgesehen ist. Dazu kann in der Vorfeldeinrichtung INA eine feste Zuordnung des Übertragungsweges VINA1 zu dem Kanals CH1 sowie zu weiteren, ggf. zu weiteren Endgeräten TE2, TE3 führenden Kanälen für Kommunikationsverbindungen mit hoher Dienstqualität eingerichtet sein.

Es ist auch möglich, dass die Anforderungsfunktion REQVVM aus der von dem Endgerät TELA empfangenen Anforderungsnachricht eine neue Anforderungsnachricht generiert, in der beispielsweise eine anzufordernde Dienstqualität für die von dem Endgerät TELA aufzubauende Kommunikationsverbindung angegeben ist.

Das Gateway UAG erkennt anhand des von der Vorfeldeinrichtung INA gewählten Übertragungsweges VINA1 oder aus einer in der Anforderungsnachricht angegebenen Kennung, dass für die in der Anforderungsnachricht gewünschte Kommunikationsverbindung eine hohe Dienstqualität gefordert ist. Das Gateway UAG fragt daher mittels seiner Anforderungsfunktion REQGWM bei dem Server SERV an, ob von dem Datennetzwerk INT die geforderte Mindest-Dienstqualität bereitgestellt werden kann. Wenn dies der Fall ist, vervollständigen das Gateway UAG, der Server SERV und das Gateway VOGW die gewünschte Kommunikationsverbindung, so dass insgesamt eine Kommunikationsverbindung VA11, CH1, VINA1, VSER, VINT, VB11 oder VB12 zu dem Endgerät TELB aufgebaut wird.

Vorzugsweise übermittelt das Gateway UAG dem Datennetzwerk INT, vorliegend also dem Server SERV, welche Dienstqualität für die Kommunikationsverbindung einzuhalten ist. Dazu wird beispielsweise ein sogenannter QoS (Quality of Service) oder ToS-Wert (Type of Service) an das Datennetzwerk INT gesendet.

Wenn die geforderte Mindest-Dienstqualität nicht von dem Datennetzwerk INT bereitgestellt werden kann, baut das Gateway UAG anstatt der Kommunikationsverbindung über das Datennetzwerk INT die Kommunikationsverbindung über das geschaltete Telekommunikationsnetz PSTN auf, wobei insgesamt eine Kommunikationsverbindung VA11, CH1, VINA1, VPSTN, VB2 zu dem Endgerät TELB aufgebaut wird.

Bei der oben erläuterten Variante prüft das Gateway UAG im Zusammenhang mit einer aufzubauenden Kommunikationsverbindung durch fallweise Verhandlung mit dem Server SERV, ob eine Verbindung mit einer Mindest-Dienstqualität über das Datennetzwerk INT möglich ist. Es ist auch möglich, dass das Gateway UAG den Server SERV zyklisch abfragt, welche Dienstqualität oder welche Dienstqualitäten momentan von dem Datennetzwerk INT gewährleistet werden können und die dabei jeweils ermittelten Werte in dem Speichermittel MEMUA ablegt. Wenn das Gateway UAG von der Vorfeldeinrichtung INA dann eine Anforderungsnachricht für eine Kommunikationsverbindung mit einer mindestens einzuhaltenden Dienstqualität erhält, überprüft das Gateway UAG anhand der gespeicherten Werte, ob die geforderte Dienstqualität momentan durch das Datennetzwerk INT bereitgestellt werden kann.

Vorzugsweise prüft das Gateway UAG, beispielsweise zyklisch, ob das sich jeweils neue Verhältnisse bezüglich der von dem Datennetzwerk INT bereitstellbaren Dienstqualität ändern. Es ist auch möglich, dass das Datennetzwerk INT, vorliegend beispielsweise der Server SERV, oder z.B. auch ein nicht dargestelltes Netzwerk-Management-System dem Gateway UAG eine Veränderung bezüglich der durch das Datennetzwerk INT bereitstellbaren Dienstqualität übermittelt.

Jedenfalls ist es möglich, dass das Gateway UAG auch eine bestehende Kommunikationsverbindung von dem Datennetzwerk INT auf das geschaltete Telekommunikationsnetz PSTN umschaltet und umgekehrt. Dabei sind beispielsweise die folgenden Umschaltungen möglich:

Das Gateway UAG ermittelt, dass für die über das Datennetzwerk INT führende Kommunikationsverbindung VA11, CH1, VINA1, VSER, VINT, VB12 zu dem Endgerät TELB die geforderte Dienstqualität nicht mehr eingehalten wird. Infolgedessen bauen das Gateway UAG und das geschaltete Telekommunikationsnetz PSTN, also die Vermittlungsstelle SW, den Kommunikationsweg VPSTN, VB12 auf. Sodann schaltet die Vermittlungsstelle SW die Verbindung V12 von der Verbindung VSW auf die Verbindung VPSTN um und das Gateway UAG schaltet die Verbindung VSER auf die Verbindung VPSTN um. Die beiden Umschaltevorgänge können z.B. durch eine Synchronisierungsprozedur aufeinander synchronisiert werden. Einfacher ist es jedoch, wenn das Gateway UAG und die Vermittlungsstelle SW für einen vorbestimmten Umschalte-Zeitraum die beiden Verbindungen VPSTN; VSER, VINT, VSW parallel zueinander schalten. Es genügt dabei prinzipiell, dass auf beiden Verbindungen VPSTN; VSER, VINT, VSW parallel empfangen wird und dass zunächst sendeseitig und anschließend empfangsseitig zwischen den jeweiligen Kommunikationswegen umgeschaltet wird.

Bei einer weiteren Fallkonstellation wird von dem Endgerät TERA eine Kommunikationsverbindung zu dem Endgerät TELB aufgebaut. Handelt es sich dabei um Kommunikationsverbindung mit hoher Dienstqualität, beispielsweise eine Sprach- oder Bildtelefonie-Verbindung, kann auch von dem Endgerät TERA aus die obige Vorgehensweise durchgeführt werden, wo zum Aufbau einer Kommunikationsverbindung mit hoher Dienstqualität der Kanal CH1 gewählt wird. Wird dagegen eine Kommunikationsverbindung mit niedrigerer Dienstqualität gefordert, beispielsweise zum Austausch von Daten mit dem Endgerät TELB oder zum Laden von Daten aus dem Datennetzwerk INT, sendet das Endgerät TERA die jeweilige Anforderungsnachricht über den Kanal CH2 an die Vorfeldeinrichtung INA. Diese leitet die dann die Anforderungsnachricht über den Übertragungsweg VINA2 an das Gateway UAG. Der Kanal CH2 und der Übertragungsweg VINA2 sind vorliegend jeweils für Kommunikationsverbindungen mit niedrigerer Dienstqualität vorgesehen. Die Sende- und Empfangsmittel TRUA des Gateways UAG ermitteln anhand des gewählten Übertragungswegs VINA2, dass Kommunikationsverbindungen mit niedrigerer Dienstqualität gefordert ist. Dementsprechend baut das Gateway UAG die jeweiligen Kommunikationsverbindung nach Möglichkeit über das Datennetzwerk INT her, es sei denn dieses kann die geforderte Dienstqualität nicht gewährleisten, so dass die jeweilige Kommunikationsverbindung über das geschaltete Telekommunikationsnetz PSTN aufgebaut werden muss.

Gegebenenfalls bei der Umschaltung der Kommunikationsverbindungen von dem geschalteten Telekommunikationsnetz PSTN auf das Datennetzwerk INT und umgekehrt auftretende Laufzeitdifferenzen, die durch unterschiedliche Daten-Übertragungsgeschwindigkeiten der beiden Netze verursacht werden, gleichen die jeweiligen an der Umschaltung beteiligten Netzwerkeinrichtungen, vorliegend die Vermittlungsstelle SW und//oder das Gateway UAG, beispielsweise durch Datenpufferung aus.

Die Kanäle CH1 und CH2 können anstatt einer einzigen vorbestimmten Dienstqualität auch einer Gruppe von Dienstqualitäten zugeordnet sein. Das Endgerät TERA sendet Datenpakete, die Daten unterschiedlicher Dienstqualität enthalten, auf einem gemeinsamen Kanal. Beispielsweise kann das Endgerät TERA auf dem Kanal CH1 sowohl Datenpakete mit Daten einer Sprach-Kommunikationsverbindung als auch Datenpakete mit Daten einer Streaming-Kommunikationsverbindung senden und empfangen. Mit Streaming-Daten sind vorliegend beispielsweise interaktiv gesteuerte Video-on-Demand-Daten (VoD) gemeint, die von dem Endgerät TERA z.B. von einem nicht dargestellten VoD-Server geladen und wiedergegeben werden. Das Endgerät TERA steuert den VoD-Server interaktiv. Damit eine Bildsequenz unterbrechungsfrei wiedergegeben werden kann, ist für Streaming-Daten eine vergleichsweise hohe Dienstqualität erforderlich, die allerdings vorliegend aufgrund einer in dem Endgerät TERA vorgesehenen Datenpufferung geringer sein kann, als die Dienstqualität der besagten Sprach-Kommunikationsverbindung. Jedenfalls trägt das Endgerät TERA bzw. das Endgerät-Programm-Modul EM mit seiner Funktion DQSET in die jeweiligen Datenpakete eine Kennung ein, aus der die Vorfeldeinrichtung INA und/oder das Gateway UAG ermitteln können, welcher Dienstqualität das jeweilige Datenpaket zugeordnet ist, so dass das Gateway UAG die jeweils zur Übertragung des Datenpaketes erforderliche Dienstqualität ermitteln und dementsprechende Kommunikationsverbindungen mit vorbestimmten Dienstqualitäten über das Datennetzwerk INT oder das geschaltete Telekommunikationsnetz PSTN aufbauen kann.

Es ist auch möglich, dass die Vorfeldeinrichtung INA und/oder das Gateway UAG anhand einer von dem Endgerät TERA oder dem Endgerät TELA in einer Anforderungsnachricht zum Aufbau einer Kommunikationsverbindung angegebenen Rufnummer, z.B. des Endgeräts TELB, ermitteln, dass eine vorbestimmte Dienstqualität für die Kommunikationsverbindung benötigt wird. Dazu sind beispielsweise in der Vorfeldeinrichtung INA bzw. in dem Gateway UAG in deren Speichermitteln MEMIN bzw. MEMUA Tabellen vorhanden, in denen eine Zuordnung Ziel-Rufnummer-zu-Dienstqualität eingetragen ist. Ferner könnte in einer einfachen Variante eine "Anrufer-zu-Dienstqualität"-Tabelle in der Vorfeldeinrichtung INA bzw. im Gateway UAG vorgesehen sein, in der generell zu allen Kommunikationsverbindungen, die von einem Teilnehmer angefordert werden, eine vorbestimmte Dienstqualität zugeordnet ist. Die jeweilige Dienstqualität ist dann beispielsweise der Quell-Adresse der jeweiligen Kommunikationsverbindung zugeordnet, z.B. eine erste Dienstqualität der Rufnummer des Teilnehmers SUBA und eine zweite Dienstqualität der Rufnummer des Endgeräts TE2. Weitere Verfeinerungen sind ohne Weiteres möglich, beispielsweise könnte für alle von den Teilnehmer SUBA angeforderten Sprach-Kommunikationsverbindung eine hohe Dienstqualität, für Daten-Kommunikationsverbindung hingegen eine niedrigere Dienstqualität konfiguriert sein. Das Gateway UAG bzw. die Vorfeldeinrichtung INA könnten dann z.B. anhand der Rufnummer des Teilnehmer SUBA und einer Sprach- bzw. Daten-Typkennung, die in einer Anforderungsnachricht enthalten sind, erkennen, welche Dienstqualität für die jeweilige Kommunikationsverbindung erforderlich ist.

Die obengenannten Konfigurationsdaten, z.B. die Ziel-Rufnummer-zu-Dienstqualität und/oder die "Anrufer-zu-Dienstqualität"-Tabelle, können durch die jeweiligen Teilnehmer, z.B. den Teilnehmer SUBA, und/oder durch ein nicht dargestelltes Netzwerk-Management-System eingestellt werden.

Es ist jedenfalls nicht unbedingt erforderlich, dass die Endgeräte TERA, TELA des Teilnehmers SUBA zum Aufbau einer Kommunikationsverbindung jeweils einen der Dienstqualität der jeweiligen Kommunikationsverbindung zugeordnete Kommunikationsweg oder Kanal CH1, CH2 verwenden oder eine separate Kennung bezüglich der einzuhaltenden Dienstqualität an die Vorfeldeinrichtung INA versenden.

Eine Kommunikationsverbindung, die von dem Endgerät TERA zu einer Einrichtung des Datennetzwerks INT führt, insbesondere eine Datenverbindung, kann die Vorfeldeinrichtung INA z.B. entweder über den Übertragungsweg VINAD und das Gateway UAG herstellen oder unmittelbar über die Verbindung VID zum Gateway DGW. Dieses stellt dann die weitere Verbindung VD zu der nicht dargestellten Einrichtung im Datennetzwerk INT her, von der das Endgerät TERA beispielsweise Daten, z.B. Programmdaten, Bilddaten oder dergleichen empfangen kann. Die Vorfeldeinrichtung INA kann auch entsprechende, von den Endgeräten TE2, TE3 angeforderte Online-Sitzungen mit dem Datennetzwerk INT über die Verbindung VID zum Gateway DGW bereitstellen.

Es kann vorbestimmt sein, dass das Gateway UAG vorbestimmte Kommunikationsverbindungen selbst dann nicht über das geschaltete Telekommunikationsnetz PSTN führt, wenn das Datennetzwerk INT eine vorbestimmte Mindest-Dienstqualität nicht bereitstellen kann. Dazu kann beispielsweise eine Tabelle in dem Gateway UAG und/oder der Vorfeldeinrichtung INA abgelegt sein, in der angegeben ist, bei welchen, vorzugsweise niederen, Dienstqualitäten das geschaltete Telekommunikationsnetz PSTN nicht zu verwenden ist. Es ist auch möglich, dass ein Endgerät, z.B. das Endgerät TERA, eine Kennung an die Vorfeldeinrichtung INA und/oder das Gateway UAG sendet, anhand derer diese ermitteln, dass die jeweils angeforderte Kommunikationsverbindung nicht über das geschaltete Telekommunikationsnetz PSTN geführt werden soll.

Die jeweils für eine Kommunikationsverbindung erforderliche Dienstqualität kann von den Endgeräten TERA, TELA jeweils im Zusammenhang mit einer aufzubauenden Kommunikationsverbindung bei der Vorfeldeinrichtung INA und/oder dem Gateway UAG angefordert werden. Beispielsweise kann an dem Endgerät TELA eine einer vorbestimmten Dienstqualität zugeordnete Vorwahl zu einer Rufnummer eingegeben werden.

Das Gateway UAG und/oder die Vorfeldeinrichtung INA können jedoch auch individuell hinsichtlich einzuhaltender Dienstqualitäten konfiguriert werden. Von dem Endgerät TELA aus können dazu beispielsweise Steuercodes oder Steuernachrichten, beispielsweise DTMF-Codes (Dual Tone Multi Frequency) oder ISDN-UUS-Nachrichten (UUS = User-to-User-Signalling) an die Vorfeldeinrichtung INA gesendet werden, welche die Codes bzw. Steuernachrichten oder daraus abgeleitete Nachrichten an das Gateway UAG sendet.

In einer komfortablen Variante stellen das Gateway UAG und/oder die Vorfeldeinrichtung INA dem Teilnehmer SUBA eine Bedienoberfläche zur Einstellung seiner individuellen Konfiguration bereit. Beispielsweise wird dazu eine Verbindung zwischen dem Endgerät TERA und dem Gateway UAG bzw. der Vorfeldeinrichtung INA hergestellt, gegebenenfalls unter Einbeziehung des Datennetzwerkes INT. Das Gateway UAG bzw. die Vorfeldeinrichtung INA senden dann Daten, die beispielsweise mit einem sogenannten Browser, z.B. einem Netscape Naviagtor oder einem Microsoft Explorer, von dem Endgerät TERA anzeigbar sind. Dabei wird beispielsweise eine Maske angezeigt, in die der Teilnehmer SUBA jeweils eine Rufnummer oder eine sonstige Zieladresse eines Kommunikationspartners eintragen kann sowie eine für eine Kommunikationsverbindung zu dieser Rufnummer einzuhaltende Mindest-Dienstqualität. Die in die Maske eingetragenen Daten werden dann von dem Endgerät TERA an das Gateway UAG bzw. die Vorfeldeinrichtung INA versandt und von diesen gespeichert.

Es ist auch möglich, dass das Gateway UAG und/oder die Vorfeldeinrichtung INA bei von dem Endgerät TERA gesendeten Anforderungsnachrichten die jeweilige Dienstqualität der angeforderten Kommunikationsverbindung aus Konfigurationsdaten ermitteln, die durch ein nicht dargestelltes Netzwerk-Management-System als ein Teilnehmerprofil oder Diensteprofil des Teilnehmers SUBA in das Gateway UAG bzw. in die Vorfeldeinrichtung INA geladen werden. Weitere Varianten der Erfindung sind ohne Weiteres möglich:

Prinzipiell könnten die Teilnehmeranschlussleitungen VA1, VA2, VA3 auch ISDN-Teilnehmeranschlussleitungen oder DSL-Anschlussleitungen (Digital Subscriber Line) in Kupfer- oder Glasfasertechnik sein und die Vorfeldeinrichtung INA eine jeweils dafür angepasste Vorfeldeinrichtung.

Ferner ist es möglich, dass statt der Teilnehmeranschlussleitungen VA1, VA2, VA3 Funkverbindungen vorgesehen sind. Das Endgerät TERA ist dann beispielsweise ein Mobilfunk-Endgerät und die Vorfeldeinrichtung INA eine sogenannte Base-Station. Es ist auch möglich, dass die Teilnehmeranschlussleitungen VA1, VA2, VA3 WLL-Funkverbindungen (WLL = Wireless Local Loop) sind und die Vorfeldeinrichtung INA sowie die Netzabschlusseinrichtung CM zum Aufbau von WLL-Funkverbindungen ausgestaltet sind.

Die Vorfeldeinrichtung INA und das Gateway UAG können auch zu einer Kombinationseinrichtung zusammengefasst sein. Beispielsweise könnte die Vorfeldeinrichtung INA dabei zur Ausführung des Gateway-Programm-Moduls GWM ausgestaltet sein. Ferner müssten dann die Sende- und Empfangsmittel TRINA zum Aufbau der zum Datennetzwerk INT und zum geschalteten Telekommunikationsnetz PSTN führenden Verbindungen VSER und VPSTN ausgestaltet sein.

Es ist auch möglich, dass die Vorfeldeinrichtung INA Funktionen einer Vermittlungsstelle, insbesondere einer Ortsvermittlungsstelle, leistet, wobei die Vorfeldeinrichtung INA beispielsweise Verbindungen zwischen den an sie angeschlossenen Teilnehmer-Endgeräten TERA, TELA, TE2 und TE3 aufbauen kann.

Die Vorfeldeinrichtung INA und das Gateway UAG können jeweils dem geschalteten Telekommunikationsnetz PSTN zugeordnet sein und beispielsweise durch ein dieses betreibendes und verwaltendes Netzwerk-Management-System gesteuert und überwacht werden.

Als Endgerät, z.B. als Endgerät TERA, kann auch ein Server vorgesehen sein, der beispielsweise VoD-Daten oder sonstige Multimedia-Daten bereitstellt, zu deren Übertragung eine Mindest-Dienstqualität erforderlich ist.

Der Kanal CH3 kann auch durch die Netzabschlusseinrichtung CM terminiert sein. Diese weist dann vorzugsweise Anschlussmittel zum Anschließen des beispielhaft für einen Rundfunk- oder Fersehempfänger stehenden Endgeräts TVA.

Es versteht sich, dass auch beliebige Kombinationen der in den Ansprüchen sowie in der Beschreibung angegebenen Maßnahmen und Anordnungen möglich sind.

## Patentansprüche

1. Verfahren zur Datenübertragung mit gesicherter Dienstqualität, bei dem ein Gateway (UAG) eine Kommunikationsverbindung über ein geschaltetes, insbesondere gesicherte physikalische und/oder logische Kommunikationsverbindungen schaltendes Telekommunikationsnetz (PSTN) aufbaut, sofern ein Datennetzwerk (INT) nicht mindestens eine vorbestimmte Dienstqualität für die Kommunikationsverbindung bereitstellen kann und das Gateway (UAG) die Kommunikationsverbindung über das Datennetzwerk (INT) aufbaut, sofern das Datennetzwerk (INT) mindestens die mindestens eine vorbestimmte Dienstqualität für die Kommunikationsverbindung bereitstellen kann, wobei ein Endgerät (TERA, TELA) bei dem mit dem Datennetzwerk (INT) verbundenen Gateway (UAG) die Kommunikationsverbindung zu einer Kommunikationspartner-Einrichtung (TELB) mit der mindestens einen vorbestimmten Dienstqualität anfordert und das Gateway (UAG) bei dem Datennetzwerk (INT) die Kommunikationsverbindung mit der mindestens einen vorbestimmten Dienstqualität anfordert, **dadurch gekennzeichnet, dass,**
- das Gateway (UAG) die Anforderung für die Kommunikationsverbindung mit der vorbestimmten Dienstqualität von einer zwischen das Endgerät (TERA, TELA) und das Gateway (UAG) geschalteten Vorfeldeinrichtung, insbesondere einer Hybrid-Fiber-Coax-Vorfeldeinrichtung, empfängt,
- die Vorfeldeinrichtung (INA) insbesondere anhand einer für die Kommunikationsverbindung vorgesehenen Zieladresse des Kommunikationspartners (TELB) und/oder anhand eines von dem Endgerät (TERA, TELA) zum Aufbau der Kommunikationsverbindung gewählten, zwischen dem Endgerät (TERA, TELA) und der Vorfeldeinrichtung (INA) eingerichteten Übertragungsweges (CH1, CH2) ermittelt, welche Dienstqualität für die von dem Endgerät (TERA, TELA) angeforderte Kommunikationsverbindung mindestens erforderlich ist,
- und dass die Vorfeldeinrichtung (INA) dem Gateway (UAG) eine Information über die für die Kommunikationsverbindung mindestens anzufordernde Dienstqualität übermittelt.

2. Verfahren nach Anspruch 1, **dadurch gekennzeichnet, dass** das Gateway (UAG) bei einer bereits auf dem Datennetzwerk (INT) aufgebauten Kommunikationsverbindung überprüft, ob das Datennetzwerk (INT) mindestens die geforderte vorbestimmte Dienstqualität für die Kommunikationsverbindung bereitstellen kann und dass das Gateway (UAG) die Kommunikationsverbindung bei unterschreiten der vorbestimmten Dienstqualität auf das geschaltete Telekommunikationsnetz (PSTN) umschaltet und/oder dass das Gateway (UAG) bei einer bereits auf dem geschalteten Telekommunikationsnetz (PSTN) aufgebauten Kommunikationsverbindung überprüft, ob das Datennetzwerk (INT) mindestens die geforderte vorbestimmte Dienstqualität für die Kommunikationsverbindung bereitstellen kann und dass das Gateway (UAG) die Kommunikationsverbindung auf das Datennetzwerk (INT) umschaltet, wenn das Datennetzwerk (INT) die mindestens eine vorbestimmte Dienstqualität für die Kommunikationsverbindung bereitstellen kann.

3. Verfahren nach Anspruch 1, **dadurch gekennzeichnet, dass** das Gateway (UAG) die für die Kommunikationsverbindung mindestens anzufordernde Dienstqualität anhand einer für die Kommunikationsverbindung vorgesehenen Zieladresse des Kommunikationspartners (TELB), insbesondere anhand einer Rufnummer, ermittelt.

4. Verfahren nach Anspruch 1, **dadurch gekennzeichnet, dass** das Endgerät (TERA, TELA) dem Gateway (UAG) eine Anforderungsnachricht sendet, in der für eine aktuell aufzubauende Kommunikationsverbindung und/oder für später aufzubauende Kommunikationsverbindungen durch das Gateway (UAG) einzustellende Dienstqualität angegeben ist.

5. Verfahren nach Anspruch 1, **dadurch gekennzeichnet, dass** die Vorfeldeinrichtung (INA) eine erste Anforderung für eine erste, für das Endgerät (TERA, TELA) aufzubauende Kommunikationsverbindung mit einer ersten vorbestimmten Dienstqualität auf einem ersten Übertragungsweg (VINA1) an das Gateway (UAG) übermittelt, dass die Vorfeldeinrichtung (INA) eine zweite Anforderung für eine zweite, für das Endgerät (TERA, TELA) aufzubauende Kommunikationsverbindung mit einer zweiten vorbestimmten Dienstqualität auf einem zweiten Übertragungsweg (VINA2) an das Gateway (UAG) übermittelt und dass das Gateway (UAG) anhand des für die erste und die zweite Anforderung gewählten ersten bzw. zweiten Übertragungsweges (VINA1, VINA2) ermittelt, dass für die erste Kommunikationsverbindung eine erste Dienstqualität gefordert ist und für die zweite Kommunikationsverbindung eine zweite Dienstqualität.

## Claims

1. Method for transmission with a secured quality of service in which a gateway (UAG) creates a communication connection via a switched telecommunication network (PSTN) and in particular a telecommunication network switching secured physical and/or logical communication connections, In so far as a data network (INT) cannot provide at least one predetermined service quality for the communication link and the gateway (UAG) creates the communication connection via the data network (INT), in so far as the data network (INT) can at least provide the at least one predetermined service quality for the communication connection, whereby a terminal device (TERA, TELA) in the gateway (UAG) connected with the data network (INT) requests the communication connection with a communication partner device (TELB) with the at least one predetermined service quality and the gateway (UAG) in the data network (INT) requests the communication connection with the at least one predetermined service quality, **characterised in that**
- the gateway (UAG) receives the request for the communication connection with the predetermined service quality from a front-end device switched between the terminal device (TERA, TELA) and the gateway, and particularly a hybrid fibre-coax front-end device,
- the front-end device (INA) determines, in particular using a destination address of the telecommunication partner (TELB) proposed for the communication connection and/or using a transmission route (CH1, CH2) selected for the creation of the communication connection and between the terminal device (TERA, TELA) and the front-end device (INA), which service quality is necessary at least for the communication connection requested by the terminal device (TERA, TELA),
- and the front-end device (INA) forwards to the gateway (UAG) information about the service quality to be requested at least for the communication connection.

2. Method according to Claim 1, **characterised in that** the gateway (UAG) checks, with a communication connection already created on the data network (INT), whether the data network (INT) can provide at least the requested predetermined service quality for the communication connection and that the gateway (UAG) switches over the communication connection If the service quality falls below the predetermined service quality to the switched telecommunication network (PSTN) and/or that the gateway (UAG) checks, with a communication connection already created on the switched telecommunication network (PSTN), whether the data network (INT) can provide at least the requested predetermined service quality for the communication connection and that the gateway (UAG) switches the communication connection to the data network (INT), if the data network (INT) can provide the at least one predetermined data quality for the communication connection.

3. Method according to Claim 1, **characterised in that** the gateway (UAG) determines the service quality at least to be requested for the communication connection using a destination address of the communication partner (TELB) proposed for the communication connection, especially using a call number.

4. Method according to Claim 1, **characterised in that** the terminal device (TERA, TELA) sends the gateway (UAG) a request message stating the service quality to be set by the gateway (UAG) for a communication connection currently to be created and/or for communication connections to be built up later.

5. Method according to Claim 1, **characterised in that** the front-end device (INA) transmits a first request for a first communication connection to be created for the terminal device (TERA, TELA) with a first predetermined service quality on a first transmission route (VINA1) to the gateway (UAG), that the front-end device (INA) transmits a second request for a second communication connection to be created for the terminal device (TERA, TELA) with a second predetermined service quality on a second transmission route (VINA2) to the gateway (UAG) and that the gateway (UAG) determines, using the first or second transmission route (VINA1. VINA2) selected respectively for the first and second request, that a first service quality is requested for the first communication connection and a second service quality is requested for the second communication connection.

## Revendications

1. Procédé de transmission de données avec une qualité de service sécurisée, avec lequel une passerelle (UAG) établit une liaison de communication par le biais d'un réseau de télécommunication (RTPC) physique et/ou logique commuté, notamment sécurisé, sous réserve qu'un réseau de données (INT) ne peut pas fournir au moins une qualité de service prédéfinie pour la liaison de communication et la passerelle (UAG) établit la liaison de communication par le biais du réseau de données (INT), sous réserve que le réseau de données (INT) peut fournir au moins l'au moins une qualité de service prédéfinie pour la liaison de communication, un terminal (TERA, TELA) sollicitant auprès de la passerelle (UAG) reliée avec le réseau de données (INT) la liaison de communication vers un dispositif correspondant (TELB) avec l'au moins une qualité de service prédéfinie et la passerelle sollicitant auprès du réseau de données (INT) la liaison de communication avec l'au moins une qualité de service prédéfinie, **caractérisé en ce que**
- la passerelle (UAG) reçoit la demande pour la liaison de communication avec la qualité de service prédéfinie de la part d'un dispositif concentrateur, notamment un dispositif concentrateur hybride fibres/coaxial, connecté entre le terminal (TERA, TELA) et la passerelle (UAG),
- le dispositif concentrateur (INA) détermine, notamment au moyen d'une adresse destinataire du correspondant (TELB) prévue pour la liaison de communication et/ou au moyen des voies de transmission (CH1, CH2) aménagées entre le terminal (TERA, TELA) et le dispositif concentrateur (INA), la qualité de service minimale qui est nécessaire pour la liaison de communication sollicitée par le terminal (TERA, TELA),
- et que le dispositif concentrateur (INA) communique à la passerelle (UAG) une information sur la qualité de service minimale à demander pour la liaison de communication.

2. Procédé selon la revendication 1, **caractérisé en ce que** la passerelle (UAG), en présence d'une liaison de communication déjà établie sur le réseau de données (INT), vérifie si le réseau de données (INT) peut fournir au moins la qualité de service prédéfinie exigée pour la liaison de communication et que la passerelle (UAG), si la qualité de service est inférieure à celle prédéfinie, commute la liaison de communication sur le réseau de télécommunication commuté (RTPC) et/ou que la passerelle (UAG), en présence d'une liaison de communication déjà établie sur le réseau de télécommunication commuté (RTPC), vérifie si le réseau de données (INT) peut fournir au moins la qualité de service prédéfinie exigée pour la liaison de communication et que la passerelle (UAG) commute la liaison de communication sur le réseau de données (INT) si le réseau de données (INT) peut fournir au moins une qualité de service prédéfinie pour la liaison de communication.

3. Procédé selon la revendication 1, **caractérisé en ce que** la passerelle (UAG) détermine la qualité de service minimale à exiger pour la liaison de communication au moyen d'une adresse destinataire du correspondant (TELB) prévue pour la liaison de communication, notamment au moyen d'un numéro d'appel.

4. Procédé selon la revendication 1, **caractérisé en ce que** le terminal (TERA, TELA) envoie à la passerelle (UAG) un message de demande dans lequel est indiquée la qualité de service à appliquer pour une liaison de communication à établir actuellement et/ou pour des liaisons de communication à établir ultérieurement par la passerelle (UAG).

5. Procédé selon la revendication 1, **caractérisé en ce que** le dispositif concentrateur (INA) communique à la passerelle (UAG) une première demande pour une première liaison de communication à établir pour le terminal (TERA, TELA) avec une première qualité de service prédéfinie sur une première voie de transmission (VINAI), que le dispositif concentrateur (INA) communique à la passerelle (UAG) une deuxième demande pour une deuxième liaison de communication à établir pour le terminal (TERA, TELA) avec une deuxième qualité de service prédéfinie sur une deuxième voie de transmission (VINA2), et que la passerelle (UAG) détermine, au moyen de la voie de transmission (VINA1, VINA2) choisie pour la première et la deuxième demande, qu'une première qualité de service est sollicitée pour la première liaison de communication et une deuxième qualité de service pour la deuxième liaison de communication.
